# EUROPEAN PATENT APPLICATION

(11) **EP 1 749 432 A1**
(43) Date of publication of application: **07.02.2007**
(21) Application number: 06118264.8
(22) Date of filing: 01.08.2006
(51) Int. Cl.: A01D 34/74

(54) **Lawncare apparatus**

(30) Priority: 03.08.2005 GB 0515964
(71) Applicant: ROBERT BOSCH GMBH, 70469 Stuttgart (DE)
(72) Inventor: Quigley, Andrew, Stowmarket, Suffolk IP14 1EY (GB)
(74) Representative: Bailey, David Martin

(57) **Abstract**

The present invention relates to a lawn care apparatus, in particular to an apparatus having a mechanism for changing the operative height of the working component of the apparatus above the ground, such as the blade of a lawnmower or the raking tines of a scarifier. We will describe a lawn care apparatus having pairs of front and rear wheels (10a,10b,10c,10d) joined by respective front and rear axles (11,12), the axles being connected to one another by a linkage (25) pivotally connected at each linkage end to respective links (13,19) transmitting motion to the front and rear axles; and wherein the linkage further comprises a dampening or cushioning element (24). Preferably, the dampening element comprises an elastically deformable section in the linkage.

## Description

The present invention relates to a lawn care apparatus, in particular to an apparatus having a mechanism for changing the operative height of the working component of the apparatus above the ground, such as the blade of a lawnmower or the raking tines of a scarifier.

To change the height-of-cut on a rotary lawnmower, for example, the ground contacting wheels or rollers must be raised or lowered relative to the deck that supports the motor or engine driving the rotating cutting element.

In one known arrangement, the mower includes front and rear axles connected by a link, and either the link itself or one of the front/rear axles is then connected to the deck, for example by means of an additional lever which can be engaged with the deck in a number of alternative positions.

GB 2 367 475 describes a lawn care machine having front and rear wheels joined by respective front and rear axles, the axles being connected at each end to respective links having openings for receiving the front and rear axles. A height adjustment arrangement includes an arm with a releasably engageable mechanism to provide alternative positions to vary the height of a working tool above the ground. The height adjustment means deforms laterally to allow engagement and disengagement of arm. A counterweight spring provides a bias to offset the static weight of the machine so enabling easy height adjustment.

With lack of care, these products can suffer damage, for example, from extreme forces if the product is dropped, particularly when their height of cut adjustment means are located at extremes of the height adjustment range, due to the fact that the height adjustment means cannot disengage to absorb the shock. In such instances, the lever element of the link is already mechanically constrained by the end of its operating slot and therefore the momentary extreme tension that is found in the rear portion of the apparatus can potentially lead to a breakage of the apparatus because there is no shock-absorbing ability in the product. In the event that the apparatus is dropped, the force is transmitted through the lever to the wheel joints which may cause their failure. Additionally the lever itself may fail. To prevent against the failure of components of the height adjustment means plastics materials with high impact resistance properties must be used. These plastics materials are expensive.

A further problem encountered with the above devices is that connection of the front and rear axles to the link is usually through separate pins which slot through corresponding holes in the connecting portions to allow the link to smoothly pivot relative to pieces connecting the respective axles. These additional components increase the cost and complexity of the manufacturing process.

The present invention seeks to address these problems and provide an improved working height adjustment means for a lawn care apparatus, which provides a dampener to relieve stress, load and impact forces on the system, and which permits the use of broader range of grades of plastics materials in the manufacturing process.

According to one aspect of the present invention there is provided a lawn care apparatus having pairs of front and rear wheels joined by respective front and rear axles, the axles being connected to one another by a linkage pivotally connected at each linkage end to respective links transmitting motion to the front and rear axles; and wherein the linkage further comprises a dampening or cushioning element.

Preferably, the linkage comprises an integral arm providing a detent that is releasably engageable with a detent mechanism in a plurality of alternative positions to provide a range of different heights in which a working tool can be positioned above the ground. Suitably, the linkage is flexible such that disengagement of the detent is achieved by manually flexing, twisting or deforming the linkage.

Suitably, the linkage comprises a single component.

Preferably, the dampening element comprises an elastically deformable section in the linkage.

Preferably, the elastically deformable section comprises a dog-leg formed in the linkage. Preferably, the dog-leg contains at least two bent portions; more preferably at least three bent portions. Preferably, straight portions link adjacent bent portions. Suitably, the straight portions are orientated substantially at right angles to the line of force between the detents, detent lever and pivoted links which transmit motion to the front and rear axles.

Preferably, the detent arm extends upwardly from said linkage such that lateral deflection of the detent arm exerts a torque on the said linkage while disengaging the detent from the detent mechanism. Suitably, the linkage is deformable from a normally straight configuration into a curved configuration in response to the lateral deflection of the detent arm.

Preferably, disengagement of the detent also occurs if a dynamic load transmitted to the linkage from the front and rear axles exceeds a predetermined level.

Preferably, when the detent is released from the detent mechanism, the static load on the front and rear axles transmitted to the linkage is counterbalanced by a resilient biasing force acting on the detent arm. Suitably, the biasing force is provided by a counterweight spring, arranged substantially coplanar to the linkage.

In one embodiment, the counterweight spring urges engagement of the detent of the linkage with the detent mechanism. Suitably, the counterweight spring acutely subtends from a connection on the linkage to a biasing connection removed therefrom. Preferably, the angle of the counterweight spring relative to the linkage creates a suitable force to forceably engage said detent of said linkage with said detent mechanism. Preferably, the angle is between about 5° and 30° to the plane of the linkage; more preferably between about 10° and 20°; yet more preferably about 15°.

In an alternative embodiment, the linkage further comprises an additional spring to forceably engage said detent of said linkage with said detent mechanism. Such an additional spring means may also be provided in embodiments where the counterweight spring urges such engagement.

Preferably, the front and rear axles are cranked at each end. Suitably, the front and rear links pivotally connected to the linkage each have a slot for accommodating a respective cranked end of the front and rear axles. Preferably, forward and backward movement of the linkage rotates the front and rear connecting links in a clockwise or anticlockwise direction to raise or lower the front and rear wheels relative to the front and rear axles.

Preferably, the pivotally connected links have an integral pivot formed in opposed ends of the front and rear axle-joining component. Preferably, the integral pivot comprises an integrally formed stud and a corresponding recess or hole. Preferably, the stud has an apex which comprises a lip extending around a portion of the circumference of the stud apex, wherein the lip retains the stud within the recess. Preferably, the recess further comprises a lip-engaging countersunk groove extending around a portion of the circumference of said recess and wherein the lip and groove secure the links in an assembled configuration.

Preferably, the integral pivot comprises links comprising recesses to accommodate corresponding studs located at extreme ends of the linkage. Alternatively, the stud of the integral pivot connection is formed on the front and rear links and the recess is formed in the linkage.

The above and other aspects of the present invention will now be illustrated in further detail, by way of example only, with reference to the accompanying drawings in which:
- Figure 1: is a perspective view from the front and first side of a first embodiment of a working height adjustment mechanism for a lawn care apparatus according to the present invention;
- Figure 2: is an above plan view of the embodiment of Figure 1;
- Figure 3: is a side view from a second side of the embodiment of Figure 1;
- Figure 4: is a perspective view from the front and second side of an alternative embodiment of a working height adjustment mechanism for a lawn care apparatus according to the present invention;
- Figure 5: is a perspective view from the front and a first side of a further alternative embodiment of a working height adjustment mechanism for a lawn care apparatus according to the present invention;
- Figure 6a-c: are exploded perspective views of a pivotable joint for the front wheels of an apparatus according to the present invention;
- Figure 7a-c: are exploded perspective views of a pivotable joint for the rear wheels of an apparatus according to the present invention; and
- Figure 8: is a schematic part view of a dog-leg of an adjustment mechanism according to the embodiment of Figure 5, illustrating in dotted lines deformation of the dog-leg portion under a momentary impact.

For clarity, only the essential components of one embodiment of the working height adjustment mechanism of the present invention are illustrated, and the remainder of the lawn care apparatus which may include a deck, drive motor and cutting element, can be taken as being conventional. In particular, a rotary lawn mower would include an electric motor or petrol engine supported on the deck and driving a grass cutting element for rotation about a vertical axis beneath the deck. The apparatus would also include an upright handle connected to the deck for manoeuvring it over the ground. Alternatively, the cutting element may be of the cylindrical type in a cylinder mower. Alternatively still, in a scarifier a plurality of tines are mounted for rotation on a generally cylindrical body. In all these cases, the deck is supported above the ground on the working height adjustment mechanism as herein described.

Referring to the drawings, the lawn care apparatus includes two front wheels 10a, 10b, and two rear wheels 10c, 10d. The front wheels are joined by a front axle 11, and the rear wheels by a rear axle 12.

In the embodiment shown, opposing ends of the front axle 11 are cranked, the crank corresponding to front wheel 10a being accommodated in a slot 15 of a substantially triangular front connecting link 13. Similarly, the opposing ends of the rear axle 12 are cranked and the crank corresponding to rear wheel 10b is accommodated in a slot 16 of a substantially L-shaped rear connecting link 19. Alternative constructions will be readily apparent to those skilled in the art.

The apex of the triangular front link 13 and of the L-shaped rear link 19 are pivotally connected, through respective joints 17 and 18, to opposed ends of an interconnecting link 25 which joins the front and rear axles. The interconnecting link 25 includes an integral upright detent arm 26 positioned about one third of the distance from the rear end of the link. The detent arm 26 also enables operation of the detent mechanism, by means of notches 27 that engage with corresponding notches (not shown) disposed on a suitable corresponding surface of an internal surface of the lawn care apparatus to form a detent mechanism. Detent arm 26 is moveable within elongate slot 29 located in a fixed part 30 of the mower such as the deck or upper cover (not shown). To disengage the detent mechanism in the embodiment shown, the arm 26 is laterally displaced away from the notches (not shown). This lateral movement is accommodated by the link 25 twisting in response to the applied torque and/or by the link 25 elastically deforming from its normally straight configuration into a slightly curved or bowed configuration.

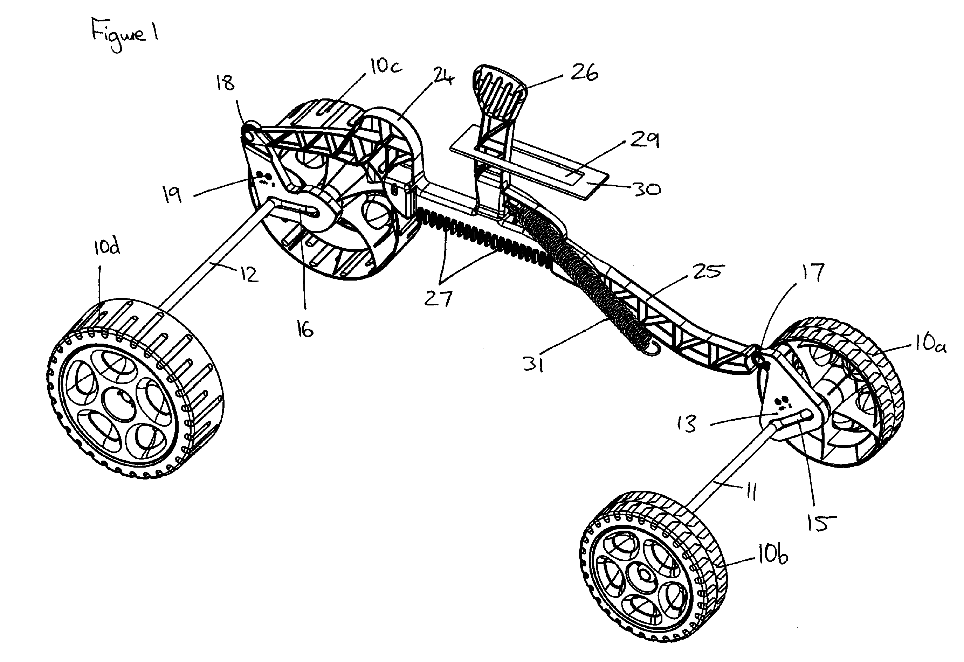

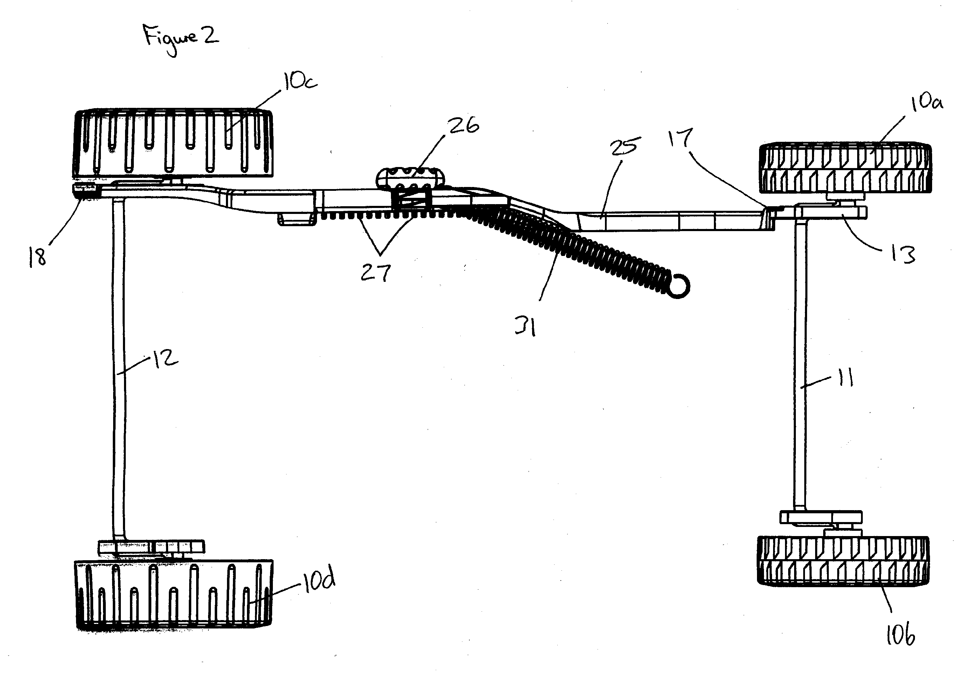

The adjustment mechanism also includes a counterweight spring 31, to provide a resilient biasing force, and which has one end connected to the link 25 and its other end connected to a point on the deck. The point of connection of the counterweight spring 31 with the deck is positioned suitably forward, relative to the apparatus, of its point of attachment to interconnecting link 25. Accordingly, when the detent arm 26 is released from engagement with the notches, the static load on the front and rear axles that is transmitted to the link 25 is counterbalanced by the spring 31 while moving the detent arm to its new position in the slot 29. Alternative preferable arrangements are shown in Figures 1-3 and Figure 5, respectively. As shown in Figure 2, the counterweight spring is aligned at an angle acute relative to interconnecting link 25. A proportion of the load force held in the counterweight spring therefore provides a force holding the detents in engagement without the need for additional springs or other biasing means.

In alternative embodiments (not shown) a further biasing element links interconnecting link 25 to a fixed part of the lawn care apparatus, such as the deck or housing, to provide a retaining force to removably engage detent arm 26 with the detent mechanism. The biasing element may include a spring. Once disengaged, the arm 26 can be moved along the slot 29 in either a forward or reverse direction so that the front and rear connecting links 13, 19 rotate in a clockwise or anticlockwise direction to raise or lower the front and rear wheels relative to the axles 11 and 12, thereby adjusting the height-of-cut of a lawn mower or the depth of raking of a scarifier. The detent arm 26 is then released and re-engages with the notches of the detent mechanism assisted by the retaining force of the biasing element.

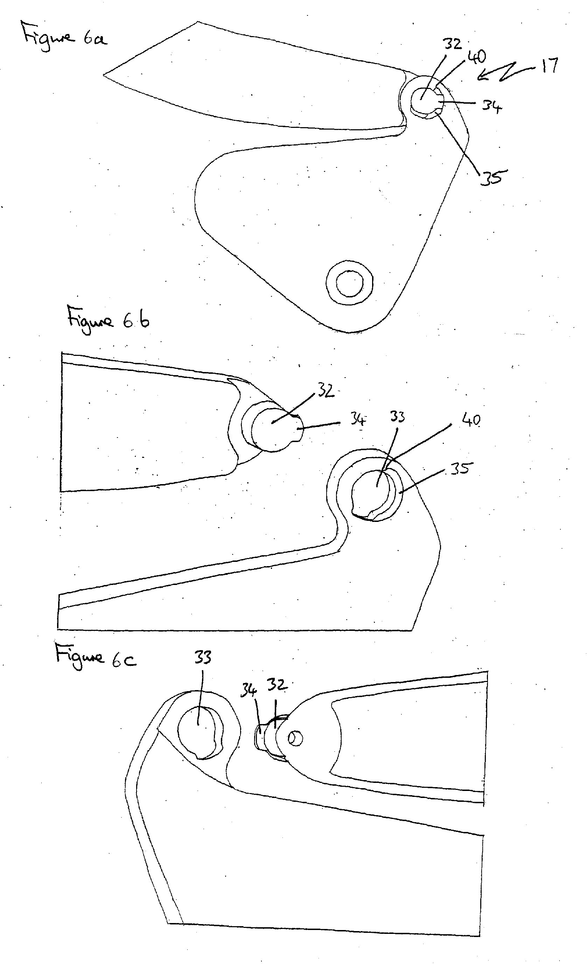

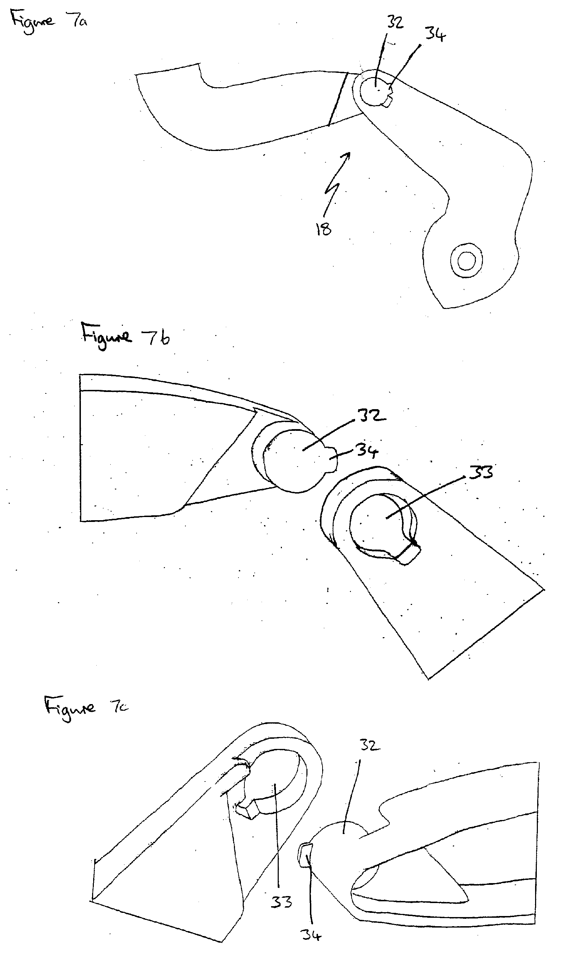

Joints 17 and 18 comprise a stud 32 and corresponding recess 33 to accommodate the respective stud. In the embodiments illustrated in Figures 6 and 7, corresponding to front joint and rear joint respectively, working and disassembled joints are shown.

Stud 32 further includes a lip 34 formed around its apex and extending around a portion of the stud circumference 32. In the assembled joint 17, 18 the lip 34 fits into and is moveable within a complementary countersunk groove 35 (best seen in Figures 6a and 6b). When the lawn care apparatus is assembled and loaded the load force on the apparatus is borne through joints 17 and 18. In particular, the forces are borne by the circumferential point of contact of stud 32 with the inner wall of recess 33 to the interconnecting link 25 and links 13 and 19. Additionally, a compressive load on the front pivot is transmitted through joint 17 via the outside diameter of the linkage. Conventionally, a pin which connects the respective components bears the load forces on the apparatus.

The use of an integral pivot rather than a conventional pin linkage reduces the complexity of the joint, in terms of manufacture, and also leads to a decrease in production costs. In particular, in use of such a joint at the front pivot, where the main loadings are compressive, the primary contact between link 13 and interconnecting link 25 is arranged to be at the outside circumferential surface of the front connecting link rather than at a small diameter stud or pin. This results in a much more efficient load transmission whilst meaning that the stud effectively serves only to hold the two components together.

If the mower is excessively loaded, for example, by dropping it, the link 25 will deform, twist or flex in such a manner as to disengage the detent arm 26 from the notches, and the deck will then fall to its lowest height-of cut position. Additionally, a dampening or cushioning element (the terms are considered synonymous in the context of the present invention) in the form of a dog-leg or double dog-leg 24, provides an elastically deformable means of absorbing an excess-load force, particularly when the detent arm is positioned at an extreme end of elongate slot 29, to prevent an undue/excessive tension load in the link and to limit the burden of force on joint 18. The dampening or cushioning element acts to remove high peaks from any short-term transient loadings. The provision of dampening element 24 also means that a wider range of plastics materials can be used in the manufacture of the link 25 since the dampener absorbs and dissipates the tension load forces which might otherwise break or damage such plastics materials. In this manner, the adjustment mechanism is protected from damage due to such excessive loads.

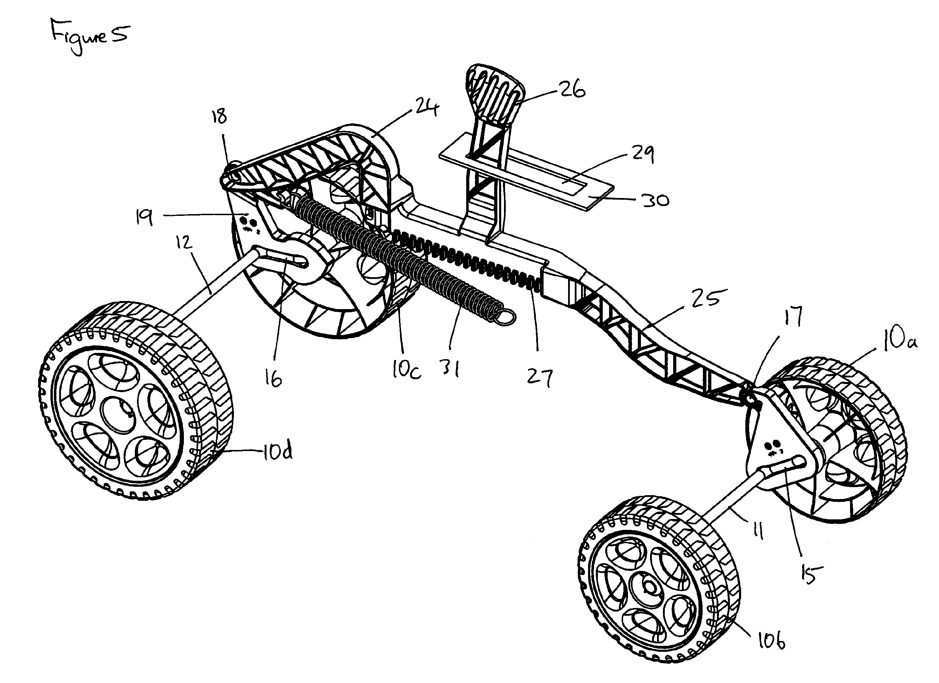

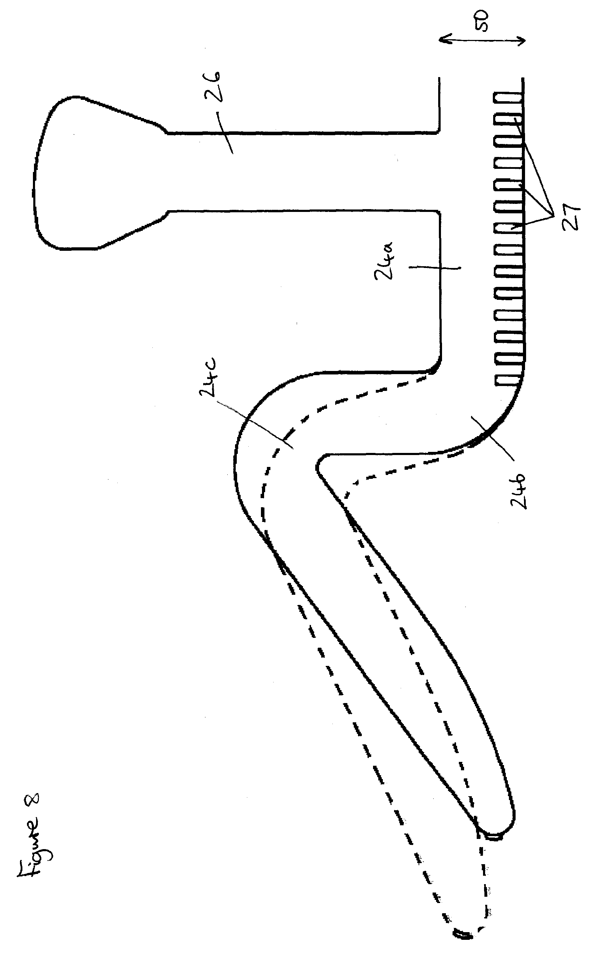

Figure 8 illustrates a dampening or cushioning element 24 (as shown in the complete adjustment-assembly of Figure 5) having a dog-leg comprising two bent portions, and in which a state of stretching, due to a load force, is shown in an exaggerated manner by the hashed lines. In this particular arrangement, the dog-leg comprises an initial section 24a having a depth 50 and to which the detent arm 26 is connected followed, in a rearward sense by a first bent portion 24b of approximately 90° upwardly followed by a straight section of similar length to depth 50 of initial section 24a, orientated substantially at right angles to the line of force between the pivots, detents and lever and a second bent portion 24c, generally re-entrant towards the line of initial section 24a, at an angle of around 110-180°.

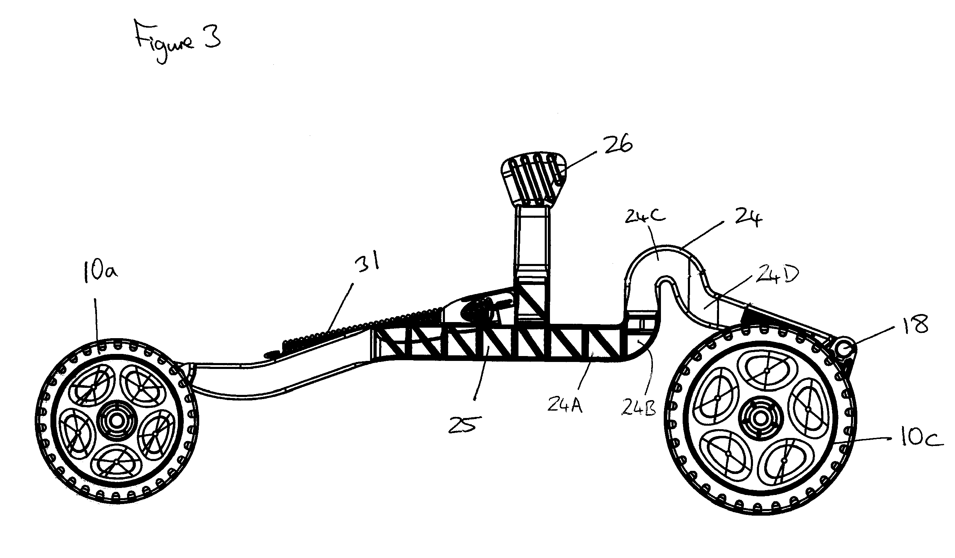

In an alternative embodiment of Figures 1 to 3, shown most clearly in Figure 3, the dampening element 24 includes a dog-leg having three bent portions from the initial section 24A including the detent arm 26. The first bend 24B is generally upwardly at an angle of approximately 90°. This is followed by a straight section of similar length to the depth of initial section 24A (corresponding to depth 50 as shown in Figure 8), orientated substantially at right angles to the line of force between the pivots, detents and lever; a generally re-entrant section 24C inclined generally downwardly at an angle of around 130-170°, suitably around 150° as shown; and a further inclined section 24D at a gentler incline to section 24C, suitably at around 30-50° to the horizontal, to rear pivot joint 18.

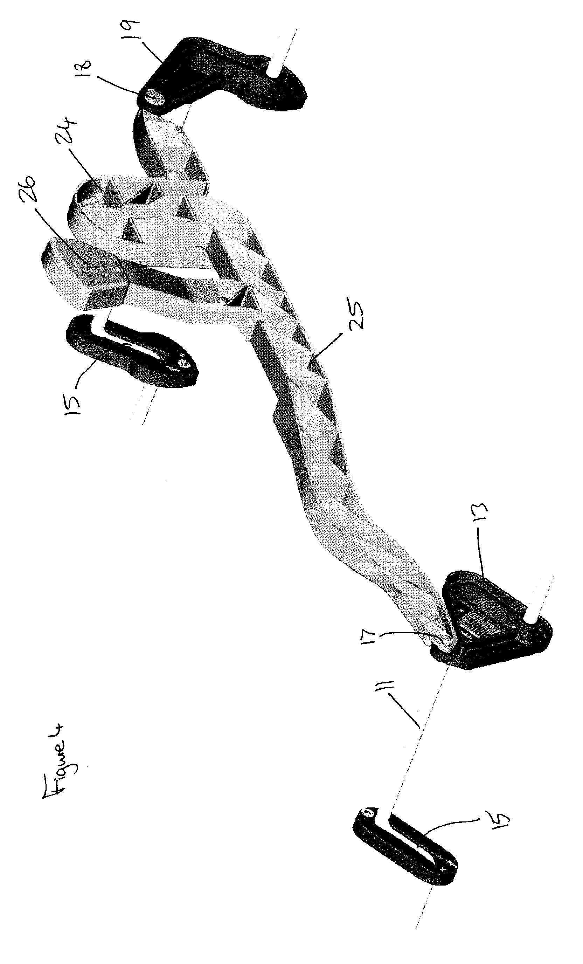

In a further alternative embodiment, illustrated in Figure 4, the dampening element 24 includes two straight sections, wherein each straight section is intermediate alternate adjacent bent portions.

The dog-leg arrangements maximise the ability of the linkage to flex under extreme momentary overloads without failure.

An advantage of the illustrated mechanism is its simplicity and by using an integral part of the interconnecting link 25 as a detent to releasably engage the deck it requires fewer components than previous adjustment mechanism. Another advantage is that compressive loading forces on the front pivot, which would normally be transmitted through a linking pin, are transmitted through joint 17 via the outside diameter of the linkage, this provides a more resilient joint arrangement which is less prone to failure. A further advantage is that the dampener helps to prevent unnecessary and potentially detrimental damage to the link 25 and so allows the use of lower impact resistant plastics materials in construction of the apparatus. Such plastics are of lower cost.

As indicated above the adjustment mechanism can be used with other lawn care apparatus, such as lawn scarifiers, to adjust the height of a working tool which is required to be driven at a range of heights above the ground.

## Claims

1. A lawn care apparatus having front and rear wheels joined by respective front and rear axles, the axles being connected to one another by a linkage pivotally connected at each end to respective links transmitting motion to the front and rear axles, **characterised in that** said linkage further comprises a dampening or cushioning element.

2. A lawn care apparatus as claimed in claim 1 wherein the linkage comprises an integral arm providing a detent that is releasably engagable with a detent mechanism in a plurality of alternative positions to provide a range of different heights in which a working tool can be positioned above the ground.

3. A lawn care apparatus as claimed in claim 2 wherein the linkage is flexible such that disengagement of the detent is achieved by manually flexing, twisting or deforming the linkage

4. A lawn care apparatus as claimed in claim 3 wherein the linkage comprises a single component.

5. A lawn care apparatus as claimed in any one of claims 1 to 4 wherein the dampening element comprises an elastically deformable section in the linkage.

6. A lawn care apparatus as claimed in claim 5 wherein the elastically deformable section comprises a dog-leg formed in the linkage.

7. A lawn care apparatus as claimed in claim 6 wherein the dog-leg contains at least two bent portions.

8. A lawn care apparatus as claimed in claim 6 wherein the dog-leg contains at least three bent portions.

9. A lawn care apparatus as claimed in claim 7 or claim 8 wherein the dog-leg further comprises straight portions between adjacent bent portions.

10. A lawn care apparatus as claimed in claim 9 wherein the straight portions are orientated substantially at right angles to the line of force between the detents, detent lever and pivoted links which transmit motion to the front and rear axles.

11. A lawn care apparatus as claimed in any one of claims 2 to 10 wherein the detent arms extends upwardly from said linkage such that lateral deflection of the detent arm exerts a torque on the said component while disengaging the detent from the detent mechanism.

12. A lawn care apparatus as claimed in any one of claims 2 to 11 in which the linkage is deformable from a normally straight configuration into a curved configuration in response to a lateral deflection of the detent arm to disengage the detent from the detent mechanism.

13. A lawn care apparatus as claimed in any one of claims 2 to 12 wherein, with the detent released from the detent mechanism, the static load on the front and rear axles transmitted to the said component of the linkage is counterbalanced by a resilient biasing force acting on the detent arm.

14. A lawn care apparatus as claimed in claim 13 wherein the resilient biasing force is provided by a counterweight spring.

15. A lawn care apparatus as claimed in claim 13 wherein the counterweight spring is arranged substantially coplanar to the linkage.

16. A lawn care apparatus as claimed in claim 13 wherein the counterweight spring acutely subtends from a connection on the linkage to a biasing connection remote therefrom.

17. A lawn care apparatus as claimed in claim 16 wherein the angle of the counterweight spring creates a suitable force to forceably engage said detent of said linkage with said detent mechanism.

18. A lawn care apparatus as claimed in claim 17 wherein, the angle is between about 5° and 30° to the plane of the linkage; more preferably between about 10° and 20°; yet more preferably about 15°.

19. A lawn care apparatus as claimed in any one of claims 2 to 18, wherein the linkage further comprises an additional spring to forceably engage said detent of said linkage with said detent mechanism.

20. A lawn care apparatus as claimed in any one of claims 2 to 19 wherein disengagement of the detent is further achieved if a dynamic load transmitted to the linkage from the front and rear axles exceeds a predetermined level.

21. A lawn care apparatus as claimed in any one of the preceding claims in which the front and rear axles are cranked at each end, the said front and rear links pivotally connected to said component of the linkage each having a slot for accommodating a respective one of the cranked ends of the front and rear axles, whereby forward and backward movement of the said component rotates the front and rear connecting links in a clockwise or anticlockwise direction to raise or lower the front and rear wheels relative to the front and rear axles.

22. A lawn care apparatus as claimed in any one of the preceding claims wherein the pivotally connected links each comprise an integral pivot formed in opposed ends of said linkage joining said front and rear axles.

23. A lawn care apparatus as claimed in claim 22 wherein said integral pivot comprises an integrally formed stud and corresponding recess.

24. A lawn care apparatus as claimed in claim 22 wherein said stud has an apex and further comprises a lip extending around a portion of the circumference of the stud apex; wherein said lip retains said stud within said recess.

25. A lawn care apparatus as claimed in claim 24 wherein said recess further comprises a lip-engaging countersunk groove extending around a portion of the circumference of said recess, and wherein said lip and groove secure the links in an assembled configuration.
